# EUROPEAN PATENT APPLICATION

(11) **EP 4 748 486 A1**
(43) Date of publication of application: **27.05.2026**
(21) Application number: 25217434.7
(22) Date of filing: 20.11.2025
(51) Int. Cl.: B01J 8/02, B01D 15/00, B01D 53/02, B01D 53/04, B01D 53/14, B01J 19/30, B01J 20/00

(54) **MULTI-PELLET PACKED BED TECHNOLOGY**

(30) Priority: 20.11.2024 US 202463722621 P
(71) Applicant: Services Pétroliers Schlumberger, 75007 Paris (FR); Schlumberger Technology B.V., 2514 JG The Hague (NL)
(72) Inventor: ARUNACHALAM, Karthikeyan, Cambridge, CB3 0EL (GB); CAMPOS DE FARIA, Debora, Cambridge, CB3 0EL (GB); MEREDITH, Andrew, Cambridge, CB4 2DB (GB); RAMIER, Julien, Cambridge, CB3 0EL (GB); GEDDES, Jill, Cambridge, CB3 0EL (GB)
(74) Representative: Schlumberger Intellectual Property Department

(57) **Abstract**

A packed bed unit for chemical processing is described. The packed bed unit includes packing material disposed within the packed bed unit, wherein the packing material includes a plurality of different compositions distributed in the packed bed unit.

## Description

### CROSS-REFERENCE TO RELATED APPLICATION(S)

The present disclosure claims priority from U.S. Prov. Appl. No. 63/722621, filed on November 20, 2024, herein incorporated by reference in its entirety.

### FIELD

The present disclosure relates to packed bed technology used in chemical processing.

### BACKGROUND

A packed bed unit (also referred to as "packed column" or "column" herein) is a hollow tube, pipe, or other vessel that is filled with packing material and used in chemical processing. The packing material typically includes pellets or particles that function as a sorbent or catalyst as part of a chemical process. Example packing material includes catalyst particles or sorbents, such as Zeolite particles, activated alumina, ceramic ball, granular activated carbon, etc. A conventional packed bed unit contains packing material of a single composition uniformly distributed within the packed bed unit. The packed bed unit can carry out a separation process or a chemical reaction. In order to perform multiple separation processes or multiple chemical reactions with packed bed technology, multiple packed bed units are configured for sequential chemical processing. This causes additional overhead in terms of footprint, energy, capital expenditure, and operational expenditure.

Several improvements have been proposed for packed bed technology in terms of modes of operation and in terms of design. For example, PCT Publication WO 2016/137561 describes a rotating packed bed unit, which offers advantages in energy usage for separation technologies. In another example, US Patent Publ. No. 2011/0146487 describes a modular pack bed unit to help more easily transport and assemble the bed. In yet another example, US Patent Publ. No. 2006/0102519 describes a micro-channel packed bed unit that carries out multi-phase reaction technology. However, these prior art systems utilize a single catalyst/sorbent.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In accordance with the present disclosure, a packed bed unit is provided that is at least partially filled with packing material that includes a plurality of different compositions distributed in the packed bed unit. Each one of the plurality of different compositions can function as i) a sorbent that selectively adsorbs a specific chemical species, ii) a catalyst facilitating a specific reaction, or iii) a chemical species that assists processes or operations in the packed bed unit with improved efficiency, such as better thermal management.

In embodiments, the distribution of the plurality of different compositions in the packed bed unit can be controlled to adsorb and regenerate multiple chemical species or catalyze multiple reactions in an efficient and intensified process, reducing process plant footprint and cost.

In embodiments, the packed bed technology of the present disclosure can be used in one or more unit processes or operations where packed bed technology is employed. For example, consider a unit process whose aim is to remove or separate components A and B from a process stream, and that the concentration of component A within the process stream is much lower than that of component B. In this embodiment, the plurality of different compositions distributed in the packed bed unit can include two different compositions, one referred to as pellet X that selectively adsorbs component A (with minimal adsorption of component B), and the other referred to as pellet Y that selectively adsorbs component B (with minimal adsorption of component A). Pellet X and Pellet Y can be distributed within the packed bed unit either uniformly or with a specifically designed gradient. In an adsorption phase, the process stream (which includes components A and B) can flow through the packed bed unit where Pellet X selectively adsorbs component A and Pellet Y selectively adsorbs component B. After the adsorption phase, the higher concentration component B can be selectively regenerated from Pellet Y as part of a first regeneration phase. The first regeneration phase can involve backflow operations or blowdown operations of a pressure swing absorption (PSA) cycle. After one or more adsorption phases and first regeneration phases (for example, once every few weeks involving cycles of the adsorption phase followed by the first regeneration phase), the lower concentration component A can be selectively regenerated from Pellet X as part of a second regeneration phase. The second regeneration phase can involve heating operations of a temperature swing adsorption (TSA) cycle.

In another example embodiment, the packed bed technology of the present disclosure can be used in a unit process that receives a process stream of reactants A and B, converts the reactants A and B to C in a first reaction, and further converts C and a different reactant D to a final product E in a second reaction. The reactant D is supplied to the unit process separate from the process stream of reactants A and B. The final product E is output from the unit process. In this embodiment, the plurality of different compositions distributed in the packed bed unit can include two different compositions, one referred to as pellet X which functions as a catalyst for the first reaction (with minimal activity toward the second reaction), and the other referred to as Pellet Y which functions as catalyst for the second reaction (with minimal activity toward the first reaction). Pellet X and Pellet Y can be distributed within the packed bed unit in a specifically designed gradient along the axial direction of the packed bed unit that allows both the first and second reactions to be carried out within the single packed bed unit. In embodiments, the stream of reactants A and B enter the packed bed unit at height L where the distribution of pellets is predominantly X Pellet material. The distribution of pellet material is predominantly X pellet material with decreasing concentration of X pellet material from heights L to M. The stream of reactant D enters the packed bed unit at height M where the first reaction is nearly complete, and the distribution of pellet material is shifting to predominately Y pellet material. Further above the height M, the distribution of pellet material is predominantly Y pellet material with increasing concentration of Y pellet material from heights M to N. The final product E is retrieved at height N where the second reaction has been completed. In cases where sufficient conversion has not happened in the specified column height (i.e., at height M for the first reaction or height N for the second reaction), recirculation streams can be used for the appropriate reactions.

### BRIEF DESCRIPTION OF THE DRAWINGS

The subject disclosure is further described in the detailed description which follows, in reference to the noted plurality of drawings by way of non-limiting examples of embodiments of the subject disclosure, in which like reference numerals represent similar parts throughout the several views of the drawings, and wherein:
Figures 1A, 1B and 1C illustrate a first embodiment of a packed bed unit 100 in accordance with the present disclosure;
Figures 2A and 2B illustrate a second embodiment of a packed bed unit 200 in accordance with the present disclosure;
Figure 3 illustrates a third embodiment of a packed bed unit 300 in accordance with the present disclosure;
Figures 4A and 4B illustrate a fourth embodiment of a packed bed unit 400 in accordance with the present disclosure; and
Figure 5 illustrates a fifth embodiment of a packed bed unit 500 in accordance with the present disclosure.

### DETAILED DESCRIPTION

The particulars shown herein are by way of example and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details in more detail than is necessary for the fundamental understanding of the subject disclosure, the description taken with the drawings making apparent to those skilled in the art how the several forms of the subject disclosure may be embodied in practice. Furthermore, like reference numbers and designations in the various drawings indicate like elements.

The term "process stream" as used herein refers to a continuous flow of material, which can be a liquid, gas, or solid, moving through a chemical process.

The term "unit process" or "unit operation" as used herein refers to a distinct step in a chemical process that involves a chemical transformation, or change, in the materials or components of a process stream.

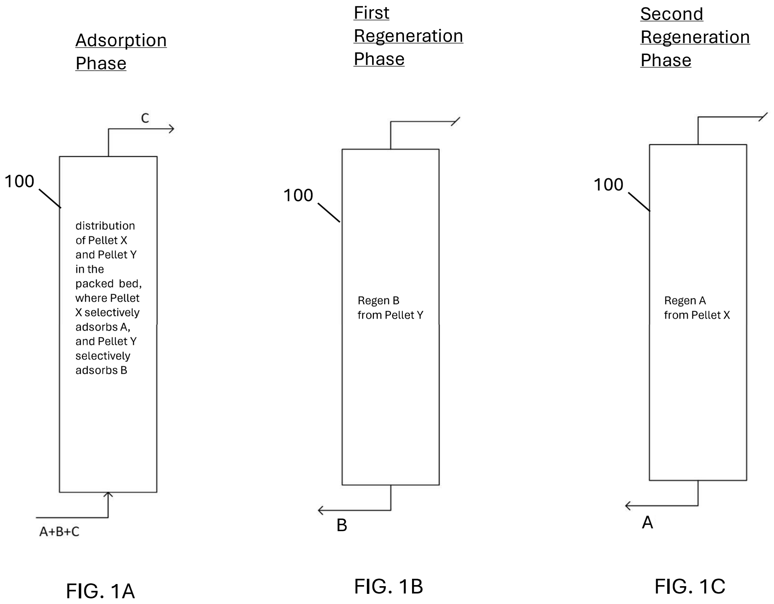

Figures 1A, 1B and 1C illustrate a first embodiment of a packed bed unit 100 in accordance with the present disclosure. The packed bed 100 is at least partially filled with packing material that includes a plurality of different compositions distributed in the packed bed 100. The packing material can include monolithic material, granular material, pelletized material, and/or spray dried material that functions as a sorbent as part of a chemical process. The packed bed unit 100 is used in a unit operation whose aim is to remove or separate components A and B from a process stream with the concentration of component A in the process stream much lower than the concentration of component B in the process stream. In this embodiment, the plurality of different compositions distributed in the packed bed unit 100 can include two different compositions, one referred to as Pellet X that selectively adsorbs component A (with minimal adsorption of component B), and the other referred to as Pellet Y that selectively adsorbs component B (with minimal adsorption of component A). Pellet X and Pellet Y can be distributed within the packed bed unit 100 either uniformly or with a specifically designed gradient. In one embodiment, Pellet X and Pellet Y can be arranged in distinct successive layer pairs of Pellet X and Pellet Y within the packed bed unit 100. In another embodiment, Pellet X and Pellet Y can be arranged as a mixed bed where Pellet X and Pellet Y are homogeneously mixed together within the packed bed unit100. In yet another embodiment, Pellet X and Pellet Y can be arranged in layers where Pellet X and Pellet Y are homogeneously mixed together in one or more of the layers within the packed bed unit 100. The process stream (which includes components A and B and a carrier gas C) flows through the packed bed unit 100 under elevated pressure in an adsorption phase where Pellet X selectively adsorbs component A and Pellet Y selectively adsorbs component B as shown in Figure 1A. The carrier gas C exits the packed bed unit 100. After the adsorption phase, the higher concentration component B can be selectively regenerated from Pellet Y as part of a first regeneration phase as shown in Figure 1B. The first regeneration phase can involve a suitable method, such as a backflow operation or blowdown operation of a pressure swing absorption (PSA) cycle. After one or more adsorption phases and first regeneration phases, the lower concentration component A can be selectively regenerated from Pellet X as part of a second regeneration phase as shown in Figure 1C. The second regeneration phase can involve a suitable method, such as heating operations of a temperature swing adsorption (TSA) cycle.

In a specific example, the packed bed unit 100 can be used in a unit operation whose aim is to remove or separate sulfur and oxygen based compounds (SOx) and nitrogen and oxygen based compounds (NOx), collectively, as component A and carbon dioxide as component B from a process stream. In this case, Pellet X selectively adsorbs sulfur and oxygen based compounds (SOx) and nitrogen and oxygen based compounds (NOx) as component A (with minimal adsorption of carbon dioxide as component B) and Pellet Y selectively adsorbs carbon dioxide as component B (with minimal adsorption of the sulfur and oxygen based compounds (SOx) and nitrogen and oxygen based compounds (NOx) as component A) as part of the adsorption phase of Figure 1A. For example, in illustrative embodiments, the material of Pellet X can include activated carbon impregnated with metal oxides (V₂O₅, CuO, Fe₂O₃, MnO₂, Cr₂O₃, and CeO₂); MFI-Type zeolite, which is a type of microporous crystalline aluminosilicate material known for its distinctive three-dimensional channel system and pore size; a composite structure of carbon-nanotubes. TiO₂, and zeolite; MOF (MFM-300(Al), Mg-MOF-74 and/or Cu-BTC for affinity to both SOx- and NOx-based compounds, MFM-300(Al), Cu-BTC and/or Mg-MOF-74 for affinity to NOx-based compounds, and MIL-101(Cr)-4F(1%), MFM-170, SIFSIX-1-Cu, MFM-300(Al), and/or MIL-160 for affinity to SOx-based compounds; and combinations of these materials. Furthermore, in illustrative embodiments, the material of Pellet Y can include activated carbon and porous materials functionalized with amine groups; zeolites (such as NaX, CaA, Y-type); MOFs (such as CALF-20, ZIF-8, UiO-66 Series); and combinations of these materials. Note that the selection of these catalyst/sorbent materials can depend on numerous factors (e.g.: P, T, composition, pH, etc.) and strategies (e.g.: type/place/frequency of regeneration) that are carried out in the reactor. The first regeneration phase of Figure 1B can selectively regenerate carbon dioxide (component B) from Pellet Y using a suitable method, such as a backflow operation or blowdown operation of a pressure swing absorption (PSA) cycle. The absorption phase of Figure 1A and the first regeneration phase of Figure 1B can be performed as part of cyclical operations performed over time for separation of carbon dioxide from the process stream. The second regeneration phase of Figure 1C can selectively regenerate sulfur and oxygen-based compounds (SOx) and nitrogen and oxygen-based compounds (NOx) (component A) from Pellet X using a suitable method, such as a heating operation of a temperature swing adsorption (TSA) cycle. The second regeneration phase of Figure 1C can be performed as part of cyclical operations performed over time (for example, once every two weeks) for separation of the sulfur and oxygen-based compounds (SOx) and nitrogen and oxygen-based compounds (NOx) from the process stream.

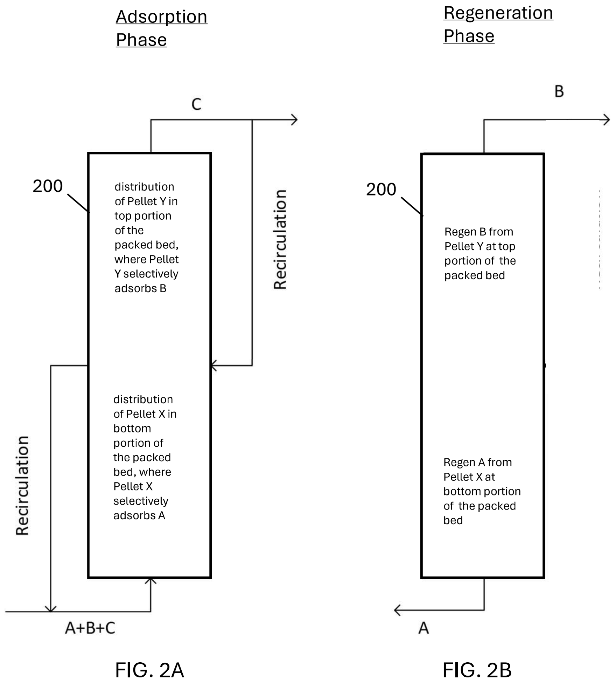

Figures 2A and 2B illustrate a second embodiment of a packed bed unit 200 in accordance with the present disclosure. The packed bed unit 200 is at least partially filled with packing material that includes a plurality of different compositions distributed in the packed bed unit 200. The packing material can include monolithic material, granular material, pelletized material, and/or spray dried material that functions as a sorbent as part of a chemical process. The packed bed unit 200 is used in a unit operation whose aim is to remove or separate components A and B from a process stream. In this embodiment, the plurality of different compositions distributed in the packed bed unit 200 can include two different compositions, one referred to as Pellet X that selectively adsorbs component A (with minimal adsorption of component B), and the other referred to as Pellet Y that selectively adsorbs component B (with minimal adsorption of component A). Pellet X is distributed within the bottom portion of the packed bed unit 200, and Pellet Y is distributed within the top portion of the packed bed unit 200. Pellet X can be distributed within the bottom portion of the packed bed unit 200 either uniformly or with a specifically designed gradient along the axial direction of the packed bed unit 200. Pellet Y can be distributed within the top portion of the packed bed unit 200 either uniformly or with a specifically designed gradient along the axial direction of the packed bed unit 200. The process stream (which includes components A and B and a carrier gas C) flows through the packed bed unit 200 under elevated pressure in an adsorption phase where Pellet X within the bottom portion of the packed bed unit 200 selectively adsorbs component A and Pellet Y within the top portion of the packed bed unit 200 selectively adsorbs component B as shown in Figure 2A. The carrier gas C exits the packed bed unit 200. After the adsorption phase, the component A can be selectively regenerated from Pellet X in the bottom portion of the packed bed unit 200 together with component B being selectively regenerated from Pellet Y in the top portion of the packed bed unit 200 as part of a regeneration phase as shown in Figure 2B. In embodiments, the streams may be recirculated or concentrated further in subsequent stages.

In other embodiments, the packed bed unit 200 can be configured with N (where N is two or more) different sorbents which are selective for adsorbing different components of the process stream at different column heights, which could potentially be regenerated in a single cycle by blowing down at appropriate heights.

In a specific example, the packed bed unit 200 of Figures 2A and 2B can be used in a unit operation whose aim is to remove or separate water and/or steam as component A and carbon dioxide as component B from a process stream. In this case, Pellet X selectively adsorbs water and/or steam as component A (with minimal adsorption of carbon dioxide as component B) and Pellet Y selectively adsorbs carbon dioxide as component B (with minimal adsorption of water and/or steam as component A) as part of the adsorption phase of Figure 2A. The regeneration phase of Figure 2B can selectively regenerate carbon dioxide (component B) from Pellet Y in the top portion of the packed bed unit 200 and selectively regenerate steam and/or water (component A) from Pellet X in the bottom portion of the packed bed unit 200. For example, in illustrative embodiments, the material of Pellet X can include silica gel; hydrophilic MOF (e.g.: MIL-101(Cr), MOF-303 (Al based), MOF-LA2 Series, Zr-MOF-808, MIL-100(Fe)); hydrophilic-modified activated carbon; and combinations of these materials. Furthermore, in illustrative embodiments, the material of Pellet Y can include silica gel, certain types of zeolites (e.g.: with low Si/Al ratio and/or small pores structures), activated alumina and core shell MOFs; and combinations of these materials. Note that the selection of these catalyst/sorbent materials can depend on numerous factors (e.g.: P, T, composition, pH, etc.) and strategies (e.g.: type/place/frequency of regeneration) that are carried out in the reactor. The regeneration phase of Figure 2B can use a suitable method, such as a backflow operation or blowdown operation of a pressure swing absorption (PSA) cycle. The absorption phase of Figure 2A and the regeneration phase of Figure 2B can be performed as part of cyclical operations performed over time for separation of carbon dioxide and water/steam from the process stream.

In this specific example, Pellet X in the bottom portion of the packed bed unit 200 can greatly reduce the water and/or steam concentration in the input stream before it reacts with Pellet Y in the top portion of the packed bed unit 200 in the adsorption phase. If needed, the adsorption of water and/or steam by Pellet X can be increased using recirculation in the adsorption phase. In the top portion of the packed bed unit 200, the dehumidified stream with carbon dioxide reacts with Pellet Y in the adsorption phase, which adsorbs the carbon dioxide in the stream. After a purge, a blow back operation (regeneration phase of Figure 2B) can be performed where dry carbon dioxide is regenerated from Pellet Y in the top portion of the packed bed unit 200 and output from the top of the packed bed unit 200, while water and/or steam with possible carbon dioxide is regenerated from Pellet X in the bottom portion of the packed bed unit 200 and output from the bottom of the packed bed. The water/steam with possible carbon dioxide output from the bottom of the packed bed unit 200 can undergo further purification in subsequent cycles or in downstream unit processes, whilst the dry carbon dioxide output from the top of the packed bed unit 200 can be pressurized and added to a high pressure dry carbon dioxide supply line (for example, in a sequestration process or other process).

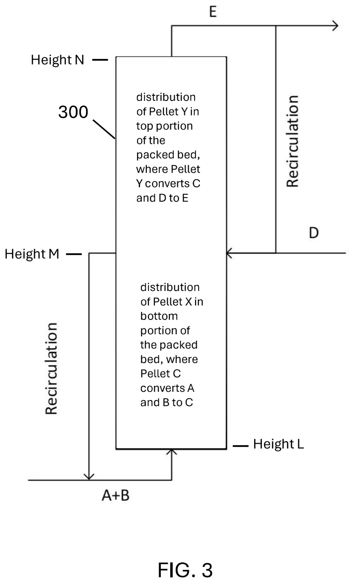

Figure 3 illustrates a third embodiment of a packed bed unit 300 in accordance with the present disclosure. The packed bed unit 300 is used in a unit operation that receives a process stream of reactants A and B, converts the reactants A and B to C in a first reaction, and further converts C and a different reactant D to a final product E in a second reaction. The reactant D is supplied to the unit process separate from the process stream of reactants A and B. The final product E is output from the unit process. In this embodiment, the plurality of different compositions distributed in the packed bed unit can include two different compositions, one referred to as Pellet X which functions as a catalyst for the first reaction (with minimal activity towards the second reaction), and the other referred to as Pellet Y which functions as catalyst for the second reaction (with minimal activity toward the first reaction). Pellet X and Pellet Y can be distributed within the packed bed unit in a specifically designed gradient that allows both the first and second reactions to be carried out within the single packed bed unit 300. In embodiments, the stream of reactants A and B enter the packed bed unit at height L where the distribution of pellets is predominantly X pellet material. The distribution of pellets is predominantly X pellet with decreasing concentration of X pellet material from heights L to M. The stream of reactant D enters the column at height M where the first reaction is nearly complete, and the distribution of pellets is shifting to predominately Y pellet material. Further above the height M, the distribution of pellets is predominantly Y pellet material with increasing concentration of Y pellet material from heights M to N. The final product E is produced at height N where the second reaction is completed. In cases where sufficient conversion has not happened in the specified column height (i.e., at height M for the first reaction, or height N for the second reaction), recirculation streams can be used for the appropriate reactions. The reaction could be assisted with multiple energy inputs, such as thermal, microwave, electrochemical, etc.

Furthermore, a packed bed unit can employ packing material that functions as a sorbent that adsorbs and desorbs a specific species or energy, without directly taking part in a separation or reaction process. For example, in reactions that are thermodynamically controlled, removing the reaction product from the stream as soon as it is formed can increase the conversion rate significantly.

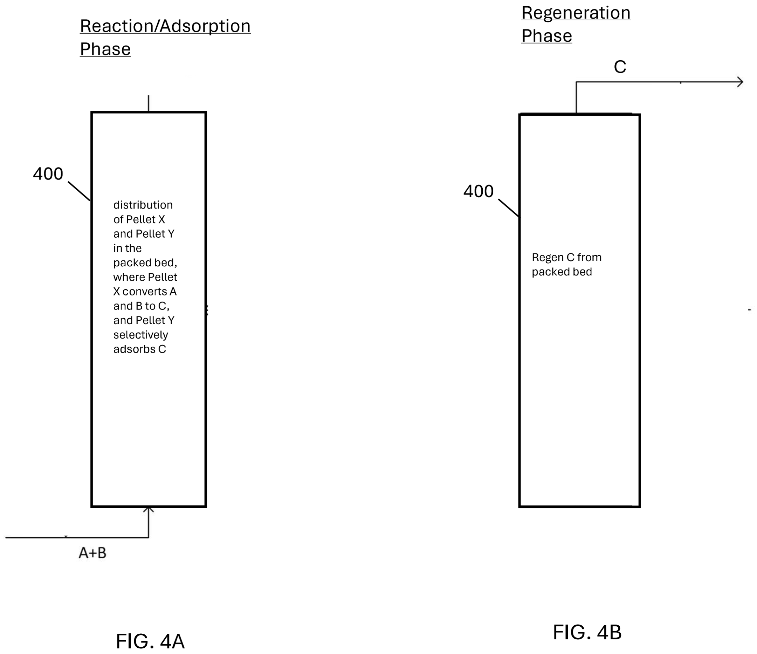

Figures 4A and 4B illustrate a fourth embodiment of a packed bed unit 400 in accordance with the present disclosure. The packed bed unit 400 is used in a unit operation that involves a reaction/adsorption phase illustrated in Figure 4A and a regeneration phase illustrated in Figure 4B. In the reaction/adsorption phase of Figure 4A, the packed bed unit 400 receives a process stream of reactants A and B, converts the reactants A and B to C in a reaction, and adsorbs/stores the reaction product C. In this embodiment, the plurality of different compositions distributed in the packed bed unit 400 can include two different compositions, one referred to as Pellet X which functions as a catalyst for the reaction, and the other referred to as Pellet Y which functions to selectively adsorb and store the reaction product C. Pellet X and Pellet Y can be distributed within the packed bed unit 400 in a specifically designed gradient that allows both the reaction and adsorption to be carried out within the single packed bed unit 400. The reaction is thermodynamically controlled by the amount of C in the packed bed unit 400. The catalyst for the reaction is present in Pellet X. However, by removing C through the adsorption of Pellet Y (which is selective to C, but not directly involved in the reaction), the conversion rate of the reaction that produces C can be significantly improved. In the regeneration phase illustrated in Figure 4B, the reaction product C stored by the Pellet Y material is selectively regenerated and output from the packed bed unit 400. The regeneration phase of Figure 4B can use a suitable method, such as a backflow operation or blowdown operation of a pressure swing absorption (PSA) cycle. The reaction/absorption phase of Figure 4A and the regeneration phase of Figure 4B can be performed as part of cyclical operations performed over time for the generation and output of the reaction product C from the process input stream components A and B.

Importantly, the packed bed unit 400 combines both reaction and separation in a single packed bed unit, as the reaction product is recovered from the packed bed unit in the regeneration phase.

In a practical example, the packed bed unit 400 can be configured to generate and store ammonia in the Reaction/Adsorption Phase of Figure 4A and regenerate and output ammonia in the Regeneration Phase of Figure 4B. In this example, the Pellet X material of the packed bed unit 400 functions as a catalyst for the reaction that produces ammonia, and the Pellet Y material of the packed bed unit 400 functions to adsorb and store the ammonia produced by this reaction. In the regeneration phase illustrated in Figure 4B, the ammonia stored in the Pellet Y material is regenerated and output from the packed bed unit 400. For example, in illustrative embodiments, the material of Pellet X can include Fe-based catalysts (e.g.: Fe-K₂O-Al₂O₃), which are the most common catalysts used in the Haber-Bosh process; Ruthenium-based catalysts; nitrate catalysts (e.g.: Co3Mo3N), perovskite structures; and combinations of these materials. Furthermore, in illustrative embodiments, the material of Pellet Y can include activated carbon; Prussian blue (PB) and its analogues (PBAs) (e.g.: CuHCF, CoHCC); metal halides (e.g.: MgCl2); zeolites (e.g.: 4A, 13X), MOFs (e.g.: HKUST-1, MOF-5, MFM-300(Cu), MFM-300(Fe)); and combinations of these materials. Note that the selection of these catalyst/sorbent materials can depend on numerous factors (e.g.: P, T, composition, pH, etc.) and strategies (e.g.: type/place/frequency of regeneration) that are carried out in the reactor. The reaction/absorption phase of Figure 4A and the regeneration phase of Figure 4B can be performed as part of cyclical operations performed over time for the generation and output of ammonia from the process input stream.

In embodiments, the configuration of the Pellet X material and the Pellet Y material in the packed bed unit 400 can be a layered configuration or mixed configuration. In the layered configuration, the packed bed unit 400 can include one layer of Pellet X material (catalyst for reaction), another of Pellet Y material (sorbent for reaction product), another layer of Pellet X material (catalyst for reaction), another of Pellet Y material (sorbent for reaction product), and so on. So in the case of generating ammonia, the packed bed unit 400 can include one layer of Pellet X material (catalyst for reaction producing ammonia), another of Pellet Y material (sorbent for ammonia), another layer of Pellet X material (catalyst for reaction producing ammonia), another of Pellet Y material (sorbent for ammonia), and so on. In the mixed configuration, the Pellet X material (catalyst for reaction producing ammonia) and the Pellet Y material (sorbent for ammonia) can be homogeneously mixed together within the packed bed unit 400. So in the case of generating ammonia, the packed bed unit 400 can include Pellet X material (catalyst for reaction producing ammonia) mixed with Pellet Y material (sorbent for ammonia) within the packed bed unit 400.

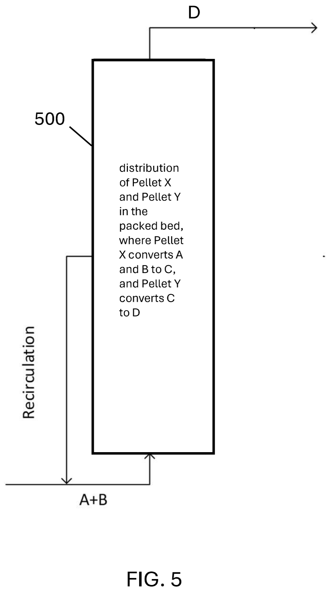

Figure 5 illustrates a fifth embodiment of a packed bed unit 500 in accordance with the present disclosure. The packed bed unit 500 is used in a unit operation that receives a process stream of reactants A and B, converts the reactants A and B to a reaction product C in a first reaction, and converts the reaction product C to a final product D in a second reaction. In this embodiment, the plurality of different compositions distributed in the packed bed unit can include two different compositions, one referred to as Pellet X which functions as a catalyst for the first reaction (with minimal activity towards the second reaction), and the other referred to as Pellet Y which functions as a catalyst for the second reaction (with minimal activity towards the first reaction). Pellet X and Pellet Y can be distributed within the packed bed unit 500 in a specifically designed gradient that allows both the first and second reactions to be carried out within the single packed bed unit 500. The unit process of the packed bed unit 500 of Figure 5 can be performed over time for the generation and output of the reaction product D from the process input stream components A and B.

Importantly, the packed bed unit 500 combines both the first and second reactions and separation of the final product D in a single packed bed.

In embodiments, the configuration of the Pellet X material and the Pellet Y material in the packed bed unit 500 can be a layered or mixed configuration. In the layered configuration, the packed bed unit 500 can include one layer of Pellet X (catalyst for the first reaction), another of Pellet Y (catalyst for the second reaction), another layer of Pellet X (catalyst for first reaction), another of Pellet Y (catalyst for the second reaction), and so on. In the mixed configuration, Pellet X material (catalyst for the first reaction) and the Pellet Y material (catalyst for the second reaction) can be homogeneously mixed together within the packed bed unit 500.

In all the scenarios and examples above, the packing material of the packed bed unit can include different classes of sorbents and catalysts, such as, for example, activated carbons, zeolites, metal organic frameworks (MOFs), covalent organic frameworks (COFs), activated alumina, silica gel, polymeric sorbents, amine grafted sorbents on silica support, metal oxides, metal sulfides, iron-based catalysts, etc. The packing material can be monolithic material, granular material, pelletized material, or spray dried material. In embodiments, the packing material can be formed from anisotropic substrates.

In all the scenarios and examples above, fluidization can be used to achieve separation of layers in the packed bed unit.

There have been described and illustrated herein several embodiments of a packed bed unit that employs packing material that includes a plurality of different compositions distributed in the packed bed. Each one of the plurality of different compositions can function as i) a sorbent that selectively adsorbs a specific chemical species, ii) a catalyst facilitating a specific reaction, or iii) a chemical species that assists other unit processes or operations in the packed bed unit through improved efficiency, such as better thermal management. While particular embodiments have been described, it is not intended that the invention be limited thereto, as it is intended that the invention be as broad in scope as the art will allow and that the specification be read likewise.

## Claims

1. A packed bed unit for chemical processing, the packed bed unit comprising:
packing material disposed within the packed bed unit, wherein the packing material includes a plurality of different compositions distributed in the packed bed unit.

2. The packed bed unit of claim 1, wherein:
at least one of the plurality of different compositions functions as a sorbent that selectively adsorbs a specific chemical species, as a catalyst facilitating a specific reaction, comprises a chemical species that assists processes or operations in the packed bed unit, and/or includes monolithic material, granular material, pelletized material, or spray dried material.

3. The packed bed unit of claim 1 or 2, wherein:
the plurality of different compositions of the packing material is distributed within the packed bed unit uniformly or with a specifically designed gradient; and/or
the plurality of different compositions of the packing material is arranged in distinct successive layer pairs within the packed bed unit; and/or
the plurality of different compositions of the packing material is homogeneously mixed together within the packed bed unit; and/or
the plurality of different compositions of the packing material is homogeneously mixed together in one or more of the layers within the packed bed unit.

4. The packed bed unit of any one of the preceding claims, wherein:
the plurality of different compositions in the packed bed unit is configured to i) selectively adsorb different components in a process stream and ii) regenerate the different components for output from the packed bed unit.

5. The packed bed unit of claim 4, wherein:
the plurality of different compositions includes a first packing material and a second packing material, wherein the first packing material is configured to selectively adsorb a first component of the process stream and regenerate the first component for output from the packed bed unit, and wherein the second packing material is configured to selectively adsorb a second component of the process stream and regenerate the second component for output from the packed bed unit.

6. The packed bed unit of claim 5, wherein:
the first packing material selectively adsorbs the first component of the process stream and the second packing material selectively adsorbs the second component of the process stream in an adsorption phase; or
the first component is regenerated from the first packing material in a first regeneration phase that follows the adsorption phase, and the second component is regenerated from the second packing material in a second regeneration phase that follows the adsorption phase and is different from the first regeneration phase; or
the first component is regenerated from the first packing material and the second component is regenerated from the second packing material in a single regeneration phase that follows the adsorption phase.

7. The packed bed unit of claim 5 or 6, wherein:
the first component of the process stream includes sulfur- and oxygen-based compounds (SOx) and nitrogen- and oxygen-based compounds (NOx), and the second component of the process stream includes carbon dioxide.

8. The packed bed unit of claim 5, 6 or 7, wherein:
the first component of the process stream includes water and/or steam, and the second component of the process stream includes carbon dioxide.

9. The packed bed unit of any one of the preceding claims, wherein:
the plurality of different compositions in the packed bed unit is configured to catalyze a reaction and adsorb and regenerate a product of the reaction.

10. The packed bed unit of claim 9, wherein:
the plurality of different compositions includes a first packing material and a second packing material, wherein the first packing material is configured to catalyze a reaction involving components of a process stream, and wherein the second packing material is configured to selectively adsorb a product of the reaction and regenerate the product of the reaction for output from the packed bed unit.

11. The packed bed unit of claim 10, wherein:
the first packing material catalyzes the reaction involving components of the process stream and the second packing material selectively adsorbs the product of the reaction in a single reaction/adsorption phase; and
the product of the reaction is regenerated from the second packing material in a regeneration phase that follows the reaction/adsorption phase; and/or
the first packing material functions as a catalyst for a reaction that produces ammonia, and the second packing material functions to adsorb and regenerate the ammonia produced by this reaction.

12. The packed bed unit of any one of the preceding claims, wherein:
the plurality of different compositions in the packed bed unit is configured to catalyze multiple reactions that involve components of the process stream; and/or
the plurality of different compositions in the packed bed unit is configured to aid efficient separation, chemical or energy conversion processes; and/or
the plurality of different compositions in the packed bed unit is configured to perform multiple separation or reaction processes within the packed bed unit; and/or
at least one composition of the plurality of different compositions is configured to store or release energy or chemical species to enhance a thermodynamically controlled reaction (thermal or chemical).

13. The packed bed unit of any one of the preceding claims, wherein:
recirculation or purge streams at specific column heights in the packed bed unit are configured to aid processes carried out within the packed bed unit; and/or
fluidization is used to achieve separation of layers in the packed bed unit.

14. The packed bed unit of any one of the preceding claims, wherein:
the plurality of different compositions includes different classes of sorbents or catalysts, such as for example activated carbons, zeolites, metal organic frameworks (MOFs), covalent organic frameworks (COFs), activated alumina, silica gel, polymeric sorbents, amine grafted sorbents on silica support, metal oxides, metal sulfides, iron-based catalysts, etc.

15. The packed bed unit of any one of the preceding claims, wherein:
at least one composition of the plurality of different compositions is formed from anisotropic substrates.
